# EUROPÄISCHE PATENTSCHRIFT

(11) **EP 2 185 735 B1**
(45) Veröffentlichungstag und Bekanntmachung des Hinweises auf die Patenterteilung: **29.11.2017**
(21) Anmeldenummer: 08785163.0
(22) Anmeldetag: 28.07.2008
(51) Int. Cl.: C21D 1/10, C21D 9/60

(54) **VERFAHREN UND VORRICHTUNG ZUM HÄRTEN VON PROFILEN**
METHOD AND DEVICE FOR HARDENING PROFILES
PROCÉDÉ ET DISPOSITIF POUR LA TREMPE DE PROFILÉS

(30) Priorität: 11.09.2007 DE 102007043154
(43) Veröffentlichungstag der Anmeldung: 19.05.2010
(73) Patentinhaber: Voestalpine Krems Gmbh, 3500 Krems (AT)
(72) Erfinder: LENGAUER, Gerhard, A-4283 Bad Zell (AT); HABACHT, Alfred, A-3720 Gaindorf (AT); BUHL, Wolfgang, A-3512 Mautern (AT); WEITZ, Franz, A-3500 Krems-Stein (AT); KREUZHUBER, Andreas, A-3493 Hadersdorf (AT); SCHIEDER, Andreas, A-3552 Lengenfeld (AT); LAGLER, Bernhard, A-3623 Kottes (AT); BRANDSTÄTTER, Werner, A-9433 Sankt Andrä (AT)
(74) Vertreter: Naefe, Jan Robert
(86) Internationale Anmeldenummer: PCT/EP2008/006214
(87) Internationale Veröffentlichungsnummer: WO 2009/033527

(56) Entgegenhaltungen:
- EP-A- 1 702 993
- WO-A-2005/021820
- DE-A1- 10 120 063
- DE-A1- 10 246 614
- DE-A1- 19 640 568
- JP-A- 11 021 619
- US-A1- 2005 006 828

## Beschreibung

Die Erfindung betrifft ein Verfahren und eine Vorrichtung zum Härten von Profilen und insbesondere zum Härten von rollgeformten offenen Profilen.

Aus der DE 101 20 063 A1 ist ein Verfahren zur Herstellung von metallischen Profilbauteilen für Kraftfahrzeuge bekannt, wobei in Bandform bereitgestelltes Ausgangsmaterial einer Walzprofiliereinheit zugeführt und zu einem Walzprofil umgeformt wird. Vor oder nach dem Durchlaufen der Walzprofiliereinheit wird das Ausgangsmaterial bzw. das Walzprofil induktiv auf eine zum Härten erforderliche Temperatur erwärmt und anschließend durch eine Abkühleinheit abgeschreckt und gehärtet. Über eine nachgeschaltete Kalibriereinheit wird das Walzprofil einer Ablängeinheit zugeführt, die das Walzprofil in separate Profilbauteile ablängt.

Aus der DE 102 54 695 B3 ist ein Verfahren zur Herstellung eines metallischen Formbauteils bekannt, bei dem zunächst ein Halbzeug aus einem ungehärteten warmformbaren Stahlblech durch ein Kaltumformverfahren zu einem Bauteil-Rohling umgeformt wird. Anschließend wird der Rohling randseitig auf eine dem herzustellenden Bauteil entsprechende Berandungskontur beschnitten. Schließlich wird der beschnittene Bauteilrohling erwärmt und in einem Warmumformwerkzeug pressgehärtet. Das Bauteil besitzt bereits nach dem Warmumformen die gewünschte Berandungskontur, so dass eine abschließende Beschneidung des Bauteilrandes entfällt.

Aus der DE 100 33 493 C2 ist eine Vorrichtung zum Wärmebehandeln von Stoßträgern für Automobile bekannt mit einem Stufenförderer zum Führen mehrerer Stoßträger und regelmäßigem und kontinuierlichem Zuführen der Stoßträger in eine vorbestimmte Richtung und einer Fördereinheit und einer Führungseinheit, die beide gleichmäßig hinter dem Schrittförderer positioniert sind, wobei eine Wärmebehandlungseinheit vorhanden ist, die zum Erwärmen der Stoßträger verwendet wird, mit einer ringförmigen Induktionsspule, während die Stoßträger von der Drehund Bewegungseinheit zu einer Mitte der Induktionsspule geführt werden, um den Stoßträgern zu ermöglichen, durch die Mitte der Induktionsspule hindurchgeführt zu werden.

Aus der DE 197 43 802 C2 ist ein Verfahren zur Herstellung eines metallischen Formbauteiles bekannt, wobei das Bauteil aus einem Stahl mit einer angegebenen Stahllegierung ausgebildet wird und partielle Bereiche der Platine in einer Zeit von weniger als 30 Sekunden auf eine Temperatur zwischen 600 °C und 900 °C gebracht werden und die hierdurch partiell wärmebehandelte Platine in einem Pressenwerkzeug zum Formbauteil umgeformt und dann das Formbauteil im Pressenwerkzeug vergütet wird. Hierdurch sollen Bauteile mit unterschiedlich harten Sohlen erzielt werden.

Aus der JP 2002020854 A ist ein Bauteil bekannt, welches nach der sogenannten tailored blank Methode hergestellt ist und welches einen Bereich besitzt, der mit einer höheren Festigkeit ausgebildet ist als ein benachbarter Bereich.

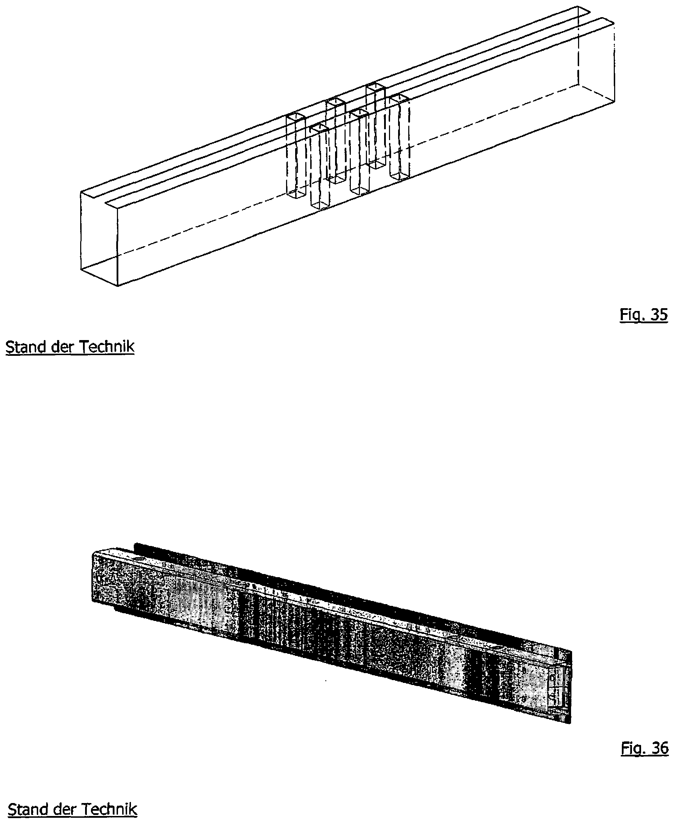

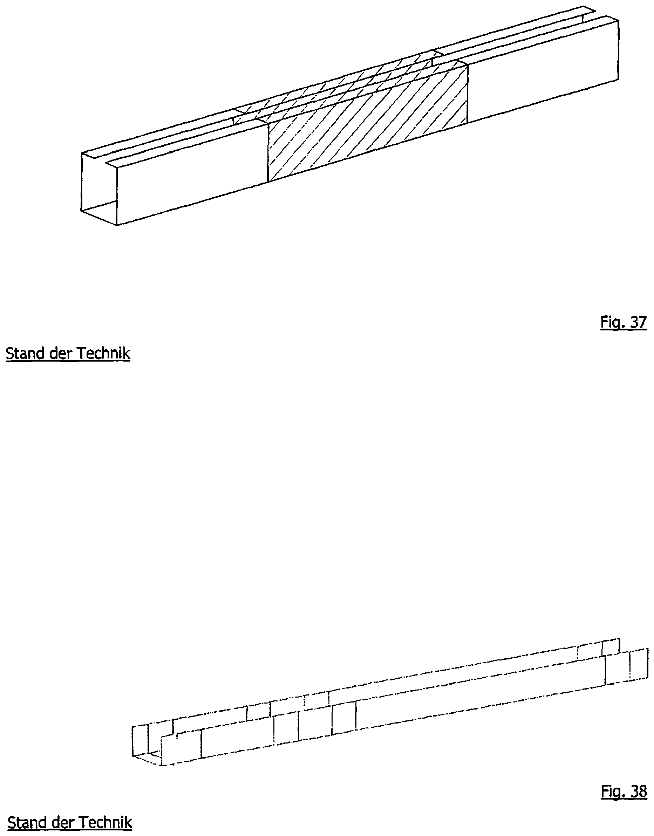

Aus der JP 2005330504 A ist eine partielle Wärmebehandlung für Bauteile bekannt, sowie eine Vorrichtung hierfür.
Aus der DE 10 2004 046 119 A1 ist ein einteiliges durch Umformung hergestelltes Blechhalbzeug und ein Verfahren zu seiner Herstellung bekannt, welches definierte Zonen unterschiedlicher Festigkeit besitzt. Zur Erzielung der gewünschten Festigkeiten in den definierten Zonen werden die definierten Zonen einer Aufheizung mit nachfolgend schneller Abkühlung unterworfen. Zur Erzielung eines hohen Temperaturgradienten ist es vorgesehen, dass ein Umformwerkzeug verwendet wird und insbesondere eine gekühlte Walze eines Walzwerkzeuges.
Aus der US 4,482,793 ist eine Vorrichtung zum induktiven Aufwärmen einer Mehrzahl von identischen langgestreckten Werkstücken WO-A 2005/021820 betrifft ein Verfahren zum Herstellen eines gehärteten Profilbauteils durch Rollprofilierung nach Vorstanzen von Löchern, Ausnehmungen ,usw., Austenitisierung und Abschreckung um eine durch über ganzen Querschnitt uniforme Härtung zu erzeugen bekannt. Aus dem veröffentlichten Forschungsvorhaben P584/Juli 2005 der Forschungsvereinigung Stahlanwendung e.V. ist es bekannt, in ein im Querschnitt viereckiges bzw. quadratisches offenes Hohlprofil rechteckige Verstärkungselemente in Form von länglichen Säulen einzubauen (Figur 35).
Darüber hinaus ist es bekannt, Träger durch das Aufbringen von rechteckigen Verstärkungselementen (Figur 36) zu verstärken. Darüber hinaus ist es aus dem Forschungsvorhaben P584 der Forschungsvereinigung Stahlanwendung, Seite 74, bekannt, analog der Patentschrift DE 197 43 802 C2, ein langgestrecktes Hohlprofil in bestimmten Bereichen zu härten.
Ebenfalls aus dem veröffentlichten Forschungsvorhaben P584 der Forschungsvereinigung Stahlanwendung Juli 2005, Seite 76, ist es bekannt, ein offenes Profil über die Länge mit unterschiedlichen Wandstärken auszubilden, wobei diese unterschiedlichen Wandstärken durch dickenflexibles Walzen des Rohstoffes erzielt wurden, wobei hier Übergangsbereiche zwischen dickeren und dünneren Bereichen ausgebildet sind (Figur 38).

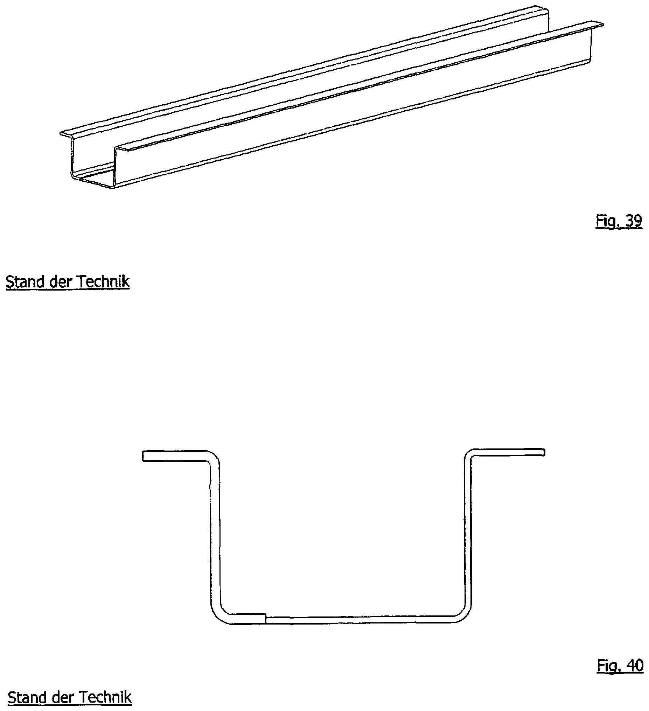

Bei einer weiteren Ausführungsform nach dem Stand der Technik werden zur Ausbildung der Hohlprofile sogenannte tailored blanks verwendet, bei denen über den Querschnitt die Dicke dadurch variiert, dass quer zur Profil-Längsrichtung unterschiedliche Stahldicken oder Stahlgüten lasergeschweißt sind (Figuren 39, 40).

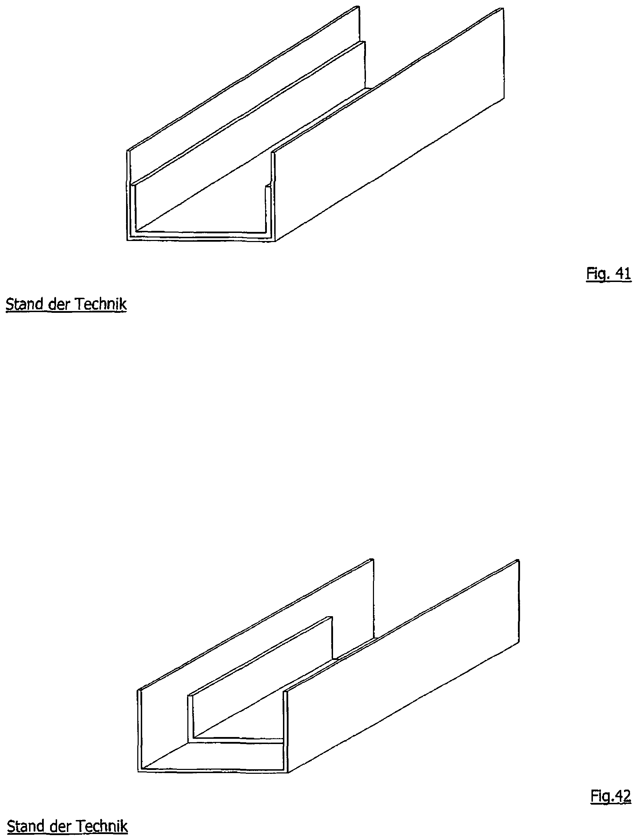

Darüber hinaus ist es bekannt (Figuren 41, 42) in Bereichen, in denen ein Profil verstärkt werden soll, Einleger innen einzulegen und gegebenenfalls zu befestigen, um das Material in diesem Bereich zu verstärken.

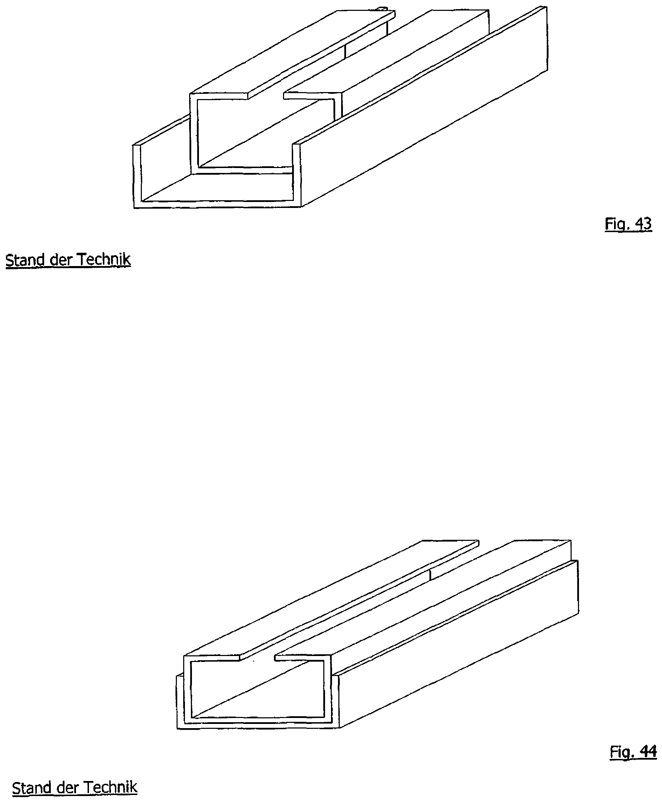

Darüber hinaus ist es auch bekannt (Figuren 43, 44) in Umkehr der vorgenannten Ausführungsform Einleger außen an einem dementsprechenden Profil vorzusehen.

Der vorgenannte Stand der Technik weist bei seinen unterschiedlichen Ausführungsformen spezifische Nachteile auf.

Das Herstellen von sogenannten tailored blanks, also insbesondere lasergeschweißten Platinen, mit unterschiedlichen Materialdicken oder unterschiedlichen Materialgüten hat zum Nachteil, dass einerseits die Schweißnaht einen undefinierten Härtebereich einbringen kann und zudem zwischen den einzelnen Bereichen oft abrupte Übergänge vorhanden sind. Hinzu kommt, dass derartige Bleche recht teuer sind, da sie eine aufwändige Herstellung erfordern. Zudem müssen derartige Teile besonders exakt gehändelt werden, damit die Schweißnaht beim und nach dem Rollprofilieren immer hundertprozentig an der richtigen Position sitzt.

Bei Profilen, die in Bereichen höherer Belastung durch Einleger innen oder außen verdickt ausgebildet sind, ist ebenfalls von Nachteil, dass eine solche Ausbildung aufwändig ist und bei einem nachfolgenden Walzprozess zu unterschiedlichen Ansprechverhalten führt. Wird eine solche Aufdopplung nach dem Walzen vorgenommen, ist dies zumindest recht aufwändig. Zudem tritt wieder der Nachteil auf, dass recht abrupte Eigenschaftsübergänge vorhanden sind.

Dies betrifft ebenfalls über die Länge teilbereichsweise gehärtete bzw. vergütete Profile.

Bei flexibel gewalzten Rohrprofilen ist von Nachteil, dass die Verfahrensführung aufwändiger ist als bei Rohrprofilen gleicher Dicke, da die Lage der Übergangsbereiche und der dicken und dünnen Bereiche axial hundertprozentig definiert sein muss, damit es über die Gesamtheit der Produktion nicht zu räumlichen bzw. zu örtlichen Verschiebungen und damit unterschiedlichen Ansprechverhalten im Belastungsfall kommt.

Bei der Einfügung von säulenförmigen oder rechteckigen Elementen an Hohlprofilen ist von Nachteil, dass dies außerordentlich aufwändig und teuer ist und wiederum recht abrupte Übergänge im Ansprechverhalten ergibt.

Materialverdickungen und Einbauten erhöhen zudem das Bauteilgewicht, was den allgemeinen Grundsätzen, insbesondere im Automobilbau zuwiderläuft, leichter zu bauen.

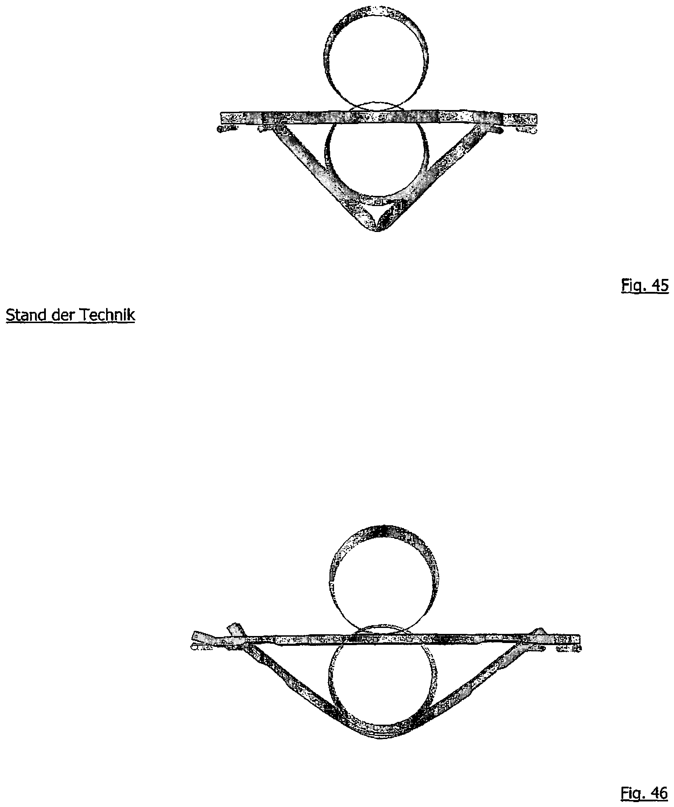

Die vorgenannten abrupten Übergänge im Ansprechverhalten bei Biegeversuchen sind deshalb nachteilig, weil im Crash-Fall oft scharfe Knicke mit einem schlagartigen Versagen auftreten. Ein solches, nicht gewünschtes versagendes Verhalten ist in Figur 45 gezeigt.

Aufgabe der Erfindung ist es, ein Verfahren zum Herstellen von gehärteten Profilen und insbesondere von gehärteten rollgeformten offenen Profilen zu schaffen, welches es erlaubt, in kostengünstiger, schneller und zuverlässiger Weise rollgeformte und leichte Profile mit unterschiedlichen Härtebereichen zu schaffen, bei denen die Übergangsbereiche sanft und effektiv erzielt werden.

Die Aufgabe wird mit einem Verfahren mit den Merkmalen des Anspruchs 1 gelöst.

Vorteilhafte Weiterbildungen sind in Unteransprüchen gekennzeichnet.

Es ist eine weitere Aufgabe, eine Vorrichtung zum Durchführen dieses Verfahrens zu schaffen, die einfach aufgebaut ist, einen hohen Durchsatz ermöglicht und eine hohe Flexibilität bezüglich unterschiedlicher Profilformen erlaubt.

Diese Aufgabe wird mit einer Vorrichtung mit den Merkmalen des Anspruchs 13 gelöst.

Vorteilhafte Weiterbildungen sind in hiervon abhängigen Unteransprüchen gekennzeichnet.

Es ist zudem eine Aufgabe ein gehärtetes Profilbauteil zu schaffen, welches kostengünstig schnell herstellbar ist und bei unterschiedlichen Härtebereichen leicht ist.

Die Aufgabe wird mit einem gehärteten Profilbauteil mit den Merkmalen des Anspruchs 16 gelöst.

Der erfindungsgemäße Weg zum Herstellen von gehärteten Profilen führt von dem für den Fachmann üblichen Weg der Verstärkung des Materials in besonders stark beanspruchten Bereichen diametral weg. Bei der Erfindung wird in Bereichen, in denen eine große Härte und Stabilität vorgesehen sein soll, das Gegenteil durchgeführt, es wird weniger Material vorgesehen. Diese Materialwegnahme kann in Form von Löchern, Langlöchern, Sicken oder in sonstiger Weise hergestellten freien Kanten oder Schlitzen erfolgen. Es wird quasi eine Stabilisierung durch vermeintliche Schwächung vorgenommen. Hierdurch lassen sich in vorteilhafter Weise zudem Gewichtsreduktionen bei Stabilitätssteigerungen erzielen.

Die für die Härtung notwendige Austenitisierungstemperatur wird im Bauteil dadurch erzielt, dass eine induktive Erwärmung vorgenommen wird. Diese erfindungsgemäß verwendete induktive Erwärmung führt im Bereich der die Materialwegnahme bzw. das Loch begrenzenden Kante zu einer höheren Temperatur, so dass bei einer entsprechenden Verfahrensführung gerade diese Bereiche gehärtet oder besonders hoch gehärtet werden. Durch die Verteilung der Löcher bzw. Materialaussparungen und die entsprechende induktive Verfahrensführung wird es erlaubt, sehr feinfühlig sowohl die Härte als auch den Härteverlauf einzustellen.

Das Prinzip der Induktionserwärmung beruht darauf, dass ein elektrisch leitender oder halbleitender Werkstoff, der in ein magnetisches Wechselfeld eingebracht wird, eine Erwärmung dadurch erfährt, dass nach dem Transformatorprinzip in ihm ein Strom induziert wird. Dieser vorwiegend in der Oberfläche fließende Wirbelstrom ist kurzgeschlossen und wird direkt in Wärme umgewandelt. Das durch spezielle Konfiguration der Frequenzen erzeugte Magnetfeld wird von einem Induktor erzeugt, welcher der zu erwärmenden Zone des Werkstückes angepasst ist.

Die Tiefe der erwärmten Schicht wird von der Generatorfrequenz bestimmt. Durch die richtige Wahl von Frequenz und Leistung lassen sich mit Induktionserwärmung von der Oberflächehärtung kleiner Teile bis zur Durchwärmung großer Schmiedestücke alle technischen Erwärmungsprozesse realisieren. Das besondere an der Induktionserwärmung ist die berührungslose Energieübertragung zwischen dem Induktor und dem Werkstück. Die Energie lässt sich auch über eine relativ große Distanz von mehreren Zentimetern übertragen. Auf diese Weise ist die berührungssichere Isolation des Induktors ohne Beeinträchtigung des Erwärmungsprozesses möglich. Zur Induktionserwärmung werden im Wesentlichen zwei Frequenzbereiche genutzt, welche sich durch die verfahrenstechnische Anwendung und die verwendete Gerätetechnik unterscheiden. Mittelfrequenzanlagen werden mittlerweile für Frequenzen von 1 bis 10 kHz, vorzugsweise als statische Generatoren gebaut. Diese Anlagen arbeiten besonders effizient bei der Erwärmung größerer Werkstücke, weil dann der - bedingt durch die niedrige Betriebsfrequenz - vielwindige Induktor ohne einen Ausgangstransformator angeschlossen werden kann.

Hochfrequenzanlagen mit Betriebsfrequenzen von 10 kHz bis 6 MHz haben die vielfältigsten Anwendungsmöglichkeiten bei der induktiven Erwärmung.

Die Induktionserwärmung verursacht zwar recht hohe Investitionskosten, dafür sind die Erwärmungskosten sehr gering bei einem sehr hohen Wirkungsgrad. Es wird eine hohe Energiedichte mit sehr hohen Maximaltemperaturen erreicht. Ein entscheidender Vorteil ist die Flexibilität gegenüber Änderungen, insbesondere Änderungen der Geometrie der zu erwärmenden Stücke. Insbesondere eignet sich die Induktionserwärmung in hervorragender Weise für eine Inline-Erwärmung in kontinuierlichen Prozessen, insbesondere dem Rollformen von Profilen aus ebenen Blechbändern.

Bei der Erfindung ist von Vorteil, dass profilierte und insbesondere rollprofilierte Bauteile geschaffen werden, die bei einer sehr hohen Stabilität ein definiertes Knick- und Versagensverhalten aufweisen, wobei diese Bauteile gegenüber Bauteilen aus dem Stand der Technik zudem leichter ausgebildet sind. Das erfindungsgemäße Verfahren erlaubt es, mit der Anordnung von Kanten an den Bauteilen sehr feinfühlig den Härteverlauf, die Stabilität und das Knickverhalten eines derartigen Bauteils einzustellen.

Um die Effekte des erfindungsgemäßen Verfahrens zu erzielen, werden Materialausnehmungen in jeder Form beispielsweise in Form von runden Löchern, eckigen Löchern, Langlöchern, Schlitzen oder Ähnlichem in das Material eingebracht, wobei es ausreichen kann, die für das Verfahren notwendigen Kanten dadurch zu erzielen, dass Einprägungen in Form von Sicken oder Durchsetzungen eingebracht werden. Eine gut nutzbare Kante sind die beiden, die Öffnung eines offenen Profils begrenzenden, Längskanten.

Das erfindungsgemäße Verfahren ist sowohl für unbeschichtete als auch beschichtete und insbesondere metallisch beschichtete Blechbauteile anwendbar.

Härteverlauf, Stabilität und Gewicht des Bauteiles lassen sich in einfacher Weise durch die Ausnehmungsanordnung und durch Induktion eingebrachte Energie einstellen. Die Ausnehmungsanordnung kann dabei sowohl eine Variation der Anzahl gleichgroßer Öffnungen über die Fläche vorsehen, es können aber auch unterschiedlich große Öffnungen in unterschiedlicher Verteilung angeordnet sein, beispielsweise in einem Bereich, der eine besonders hohe Härte besitzt, viele auch unterschiedlich große Löcher, so dass beispielsweise kleine Löcher die Zwischenräume zwischen großen Löchern ausfüllen. Wie bereits ausgeführt, müssen hierbei die Löcher nicht unbedingt rund sein. Es kann sich auch um eckige Ausstanzungen handeln, deren begrenzende Wandungsabschnitte quasi eine Art Gitterstruktur ausbilden. Die Gitterstruktur kann hierbei in hoch zu härtenden Bereichen größer sein als in niedriger zu härtenden Bereichen. Zu Bereichen hin, die eine geringere Härtung erfahren sollen, können dann weniger aber größere Löcher oder generell weniger ausgesparte Fläche vorhanden sein.

Die Erfindung wird anhand einer Zeichnung beispielhaft erläutert. Es zeigen hierbei:
- Figur 1:: ein mit dem erfindungsgemäßen Verfahren gehärtetes Profil, wobei nur ein bestimmter Längenabschnitt gehärtet ausgebildet ist und aus Übersichtsgründen keine Öffnungen gezeigt sind;
- Figur 2:: ein über die gesamte Profillänge gehärtetes Profil, wobei keine Öffnungen gezeigt sind;
- Figur 3:: den Härteverlauf ausgehend von einer eine Öffnung begrenzenden Kante in das Material hinein;
- Figur 4:: zusätzlich eine Ausstanzung mit ringförmig einem hohen Härtebereich;
- Figur 5:: stark schematisiert eine mögliche Ausnehmungsverteilung in den Seitenwandungen eines Profilbauteiles mit darum liegenden hohen Härtebereichen;
- Figur 6:: einer weiteren möglichen Ausführungsform, bei der Öffnungen im Bodenbereich angeordnet sind und zudem zusätzlich Aussparungen in einem Längsschlitz vorhanden sind, wobei die Bereiche der höchsten Härte schraffiert dargestellt sind;
- Figur 7:: eine weitere Ausführungsform mit einer möglichen Ausnehmungsanordnung;
- Figur 8:: ein weiteres Profil mit einer möglichen Ausnehmungsanordnung und einem eingezeichneten Härteverlauf;
- Figur 9:: eine weitere Ausnehmungsanordnung in einem Profilbauteil mit schematisiert eingezeichneten Härteverläufen;
- Figur 10:: ein weiteres Profil mit einer möglichen Ausnehmungsanordnung, insbesondere im Anbindungsbereich des Profils;
- Figur 11:: stark schematisiert ein erfindungsgemäßer Verfahrensablauf;
- Figur 12:: eine weitere Ausführungsform eines erfindungsgemäßen Verfahrensablaufs für verzinkte Bleche zur Erzielung einer Legierung;
- Figuren: 13 und 14: eine weitere Ausführungsform eines erfindungsgemäßen Verfahrensablaufs, bei dem ein Ablängschritt und eine Vereinzelung und Speicherung zwischengeschaltet sind;
- Figur 15:: eine weitere Ausführungsform der Vorrichtung nach den Figuren 13 und 14, wobei abgelängte Profile erzeugt werden;
- Figur 16:: stark schematisiert ein Ofen und weitere Umformwerkzeuge zum Weiterbearbeiten der in einer Anlage gemäß Figur 15 erzeugten abgelängten Profileinheiten mit einer Kühlung und/oder Erwärmung und Kühlung in einem Werkzeug;
- Figur 17:: eine erste Ausführungsform von Konduktoren, die auf eine Seitenfläche eines Profils einwirken;
- Figur 18:: eine weitere Ausführungsform, wobei zusätzlich Härtungsausnehmungen vorgesehen sind;
- Figur 19:: eine weitere Ausführungsform eines Induktors zum Induzieren im Inneren eines offenen Profils;
- Figur 20:: eine weitere mögliche Ausführungsform gemäß Figur 19 ohne Härtungsöffnungen;
- Figur 21:: eine weitere mögliche Ausführungsform von Konduktoren;
- Figur 22:: die Konduktoren nach Figur 17 in einem Schnitt;
- Figur 23:: die Induktoren nach Figur 19 und 20 in einem Schnitt;
- Figur 24:: die Induktoren nach Figur 21 in einem Schnitt;
- Figur 25:: die Anordnung von Induktoren bei einem Profil nach Figur 10;
- Figur 26:: eine weitere mögliche Ausführungsform eines Ringinduktors;
- Figur 27:: eine weitere Ausführungsform eines Induktors, der in eine Einprägung eintaucht;
- Figur 28:: eine weitere mögliche Ausführungsform von Induktoren für ein Profil;
- Figur 29:: Induktoren nach Figur 25 in einer Seitenansicht;
- Figur 30:: ein möglicher Ringinduktor in einer Schnittansicht;
- Figur 31:: eine Induktoranordnung nach Figur 27 in einer seitlichen Ansicht;
- Figur 32:: die Anordnung von Induktoren nach Figur 28 in einer seitlichen Ansicht;

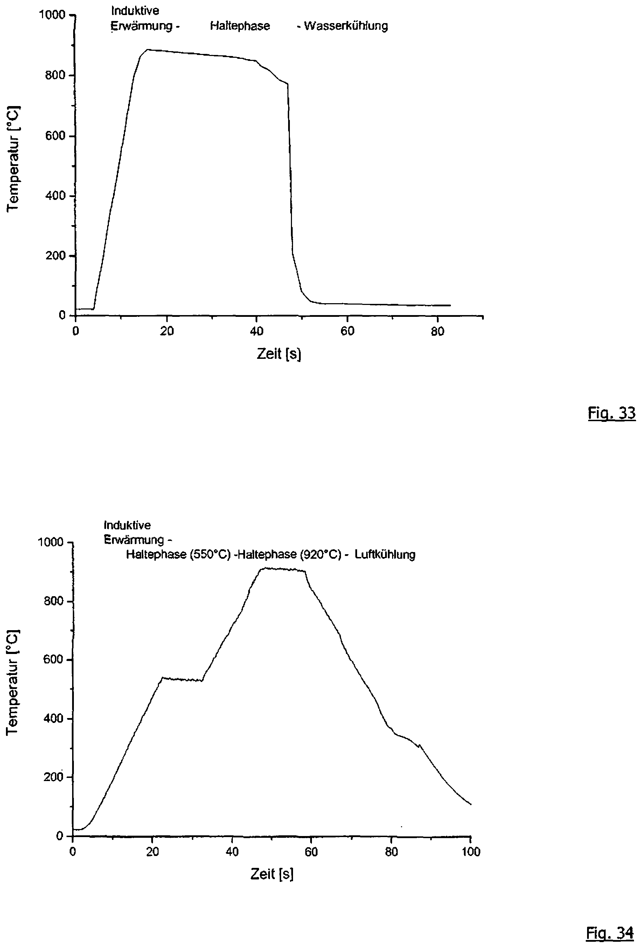

- Figur 33:: eine Temperaturverlaufskurve beim Härten nach dem erfindungsgemäßen Verfahren;
- Figur 34:: eine weitere Temperaturverlaufskurve beim Härten nach dem erfindungsgemäßen Verfahren mit einer zwischengeordneten Haltephase zur Ausbildung einer Zink-EisenBeschichtung aus einer Zinkbeschichtung;
- Figur 35:: in einen Träger eingebrachte Säulen zur Erhöhung der Stabilität nach dem Stand der Technik;
- Figur 36:: Verstärkung eines Trägers mit einem Rechteckprofil nach dem Stand der Technik;
- Figur 37:: eine vollständige Härtung ein einem Teilabschnitt einer Profillänge nach dem Stand der Technik;
- Figur 38:: ein durch flexibles Walzen mit unterschiedlichen Dickenzonen erzeugtes Profil;
- Figur 39:: ein Profil mit unterschiedlichen Materialien und/oder Materialdicken nach dem Stand der Technik;
- Figur 40:: das Profil nach Figur 39 in einem Schnitt zeigend zwei unterschiedliche Materialdicken;
- Figuren 41 und 42:: Einleger innen zur Erhöhung der Stabilität eines Profils;
- Figuren 43 und 44:: Einleger außen zur Erhöhung der Stabilität eines innen liegenden Trägers;
- Figur 45:: ausknickendes unharmonisches Versagen eines Trägers nach dem Stand der Technik;
- Figur 46:: harmonisches Biegeversagen eines nach dem erfindungsgemäßen Verfahren hergestellten Profils.

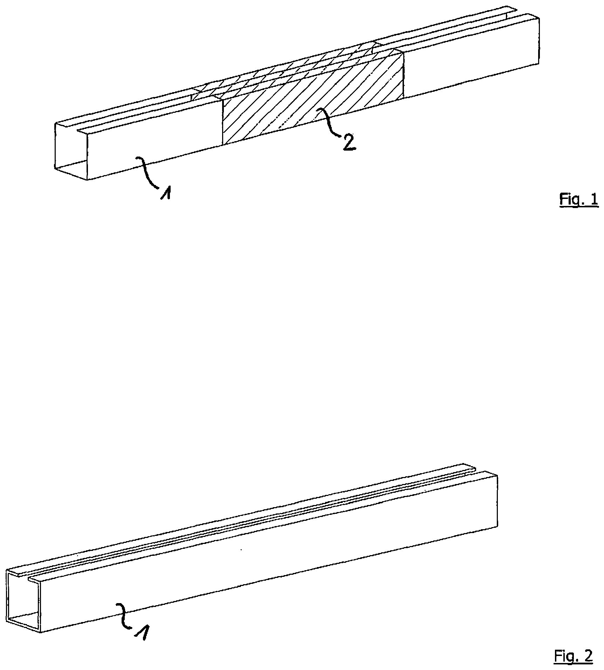

Das erfindungsgemäße Verfahren sieht vor, Profile 1 aus einer härtbaren Stahllegierung zunächst zu einem insbesondere offenen Profilquerschnitt 1 zu profilieren, beispielsweise mittels Rollprofilierung und anschließend zu härten. Das zumindest teilbereichsweise Härten derartiger Profile erfolgt dabei ganz allgemein dadurch, dass mittels Induktion in dem Stahlmaterial Wirbelströme induziert werden, welche sofort für eine starke Erhitzung des Stahlmaterials sorgen. Um eine Härtung herbeizuführen, muss dieses Stahlmaterial durch die Induktion zumindest teilbereichsweise auf eine Temperatur oberhalb der sogenannten Austenitisierungstemperatur erhitzt werden. Wird ein derartiges austenitisiertes Stahlmaterial mit einer Geschwindigkeit abgekühlt, die über der sogenannten kritischen Härtegeschwindigkeit liegt, kommt es zu einer speziellen Ausbildung des Kristallgitters bzw. zu speziellen Ausbildungen spezieller Metallphasen, welche die Härtung bewirken. Grundsätzlich kann hierbei die Härtung, wie auch aus dem Stand der Technik bekannt, lediglich in bestimmten Bereichen 2 (Figur 1) oder über das gesamte Profil (Figur 2) erfolgen.

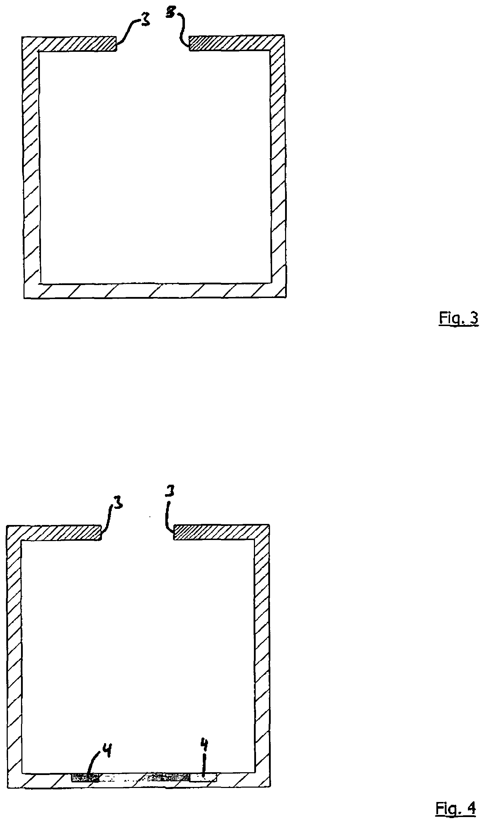

Bei der Induktion kann beobachtet werden, dass sich Kanten 3 erheblich schneller und auch höher aufheizen als die übrigen Wandungsbereiche eines Stahlbauteils. Der Verlauf der Aufheizung ist in den Figuren 3 und 4 gezeigt, wobei rundum eingebrachte Ausstanzungen, Bereiche 4, entstehen, die ebenfalls besonders hoch und schnell aufgeheizt werden. Bei der in den Figuren 3 und 4 gezeigten Verteilung der Wärme ist zu erwarten, dass beim Härten ein ähnlicher Verlauf der Materialhärte entsteht.

Für die zu erzielende Härte ist einerseits die absolute Temperatur des Stahlmaterials wichtig, auf der anderen Seite jedoch auch die Zeit, über die das Stahlmaterial die Austenitisierungstemperatur inne hat, denn die Umwandlungsprozesse benötigen eine gewisse Zeit.

Dementsprechend kann mit den gezeigten Verläufen der Temperatur auch ein entsprechender Härteverlauf erzielt werden, denn die besonders hoch aufgeheizten Bereiche haben vermutlich auch länger eine Temperatur oberhalb der Austenitisierungstemperatur, während die anderen Bereiche diese Temperatur erst später erreichen und somit weniger Zeit für Umwandlungen besteht.

Selbstverständlich kann der Prozess auch derart gefahren werden, dass zwar in den Kantenbereichen eine Härtung erzielt wird, jedoch in einem gewissen Abstand hiervon die Härtetemperatur nicht überschritten oder zumindest nicht solange überschritten wird, dass eine wirkliche Härtung erfolgt.

Somit lässt sich mit Kanten 3 einerseits und andererseits der Stärke und Dauer der Induktion bestimmen, ob ein Bauteil über den Querschnitt vollständig oder nur teilweise bzw. in unterschiedlichen Stärken gehärtet wird.

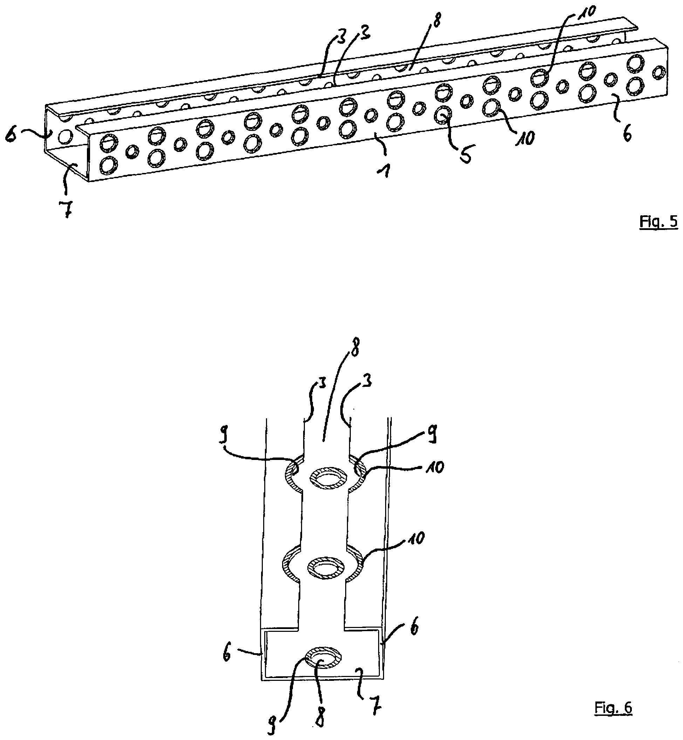

In den Figuren 5 und 6 ist neben den in den Figuren 3 und 4 gezeigten Kanten 3 eine Mehrzahl von Härteausnehmungen 5 gezeigt, welche in Seitenwandungen 6 bzw. Bodenwandungen 7 eines Profilbauteils eingebracht sind.

Die Kanten 3 begrenzen dabei eine axial verlaufende Öffnung 8 eines üblichen offenen Profils 1 während die Öffnungen 5 verteilt in den Wandungen angeordnet sind. Bei Öffnungen 5 in Seitenwandungen 6 (Figur 5) oder Öffnungen 8 in Bodenwandungen 7 (Figur 6) kann es sich beispielsweise um kreisförmige Löcher handeln. Diese Öffnungen können selbstverständlich auch eckig, beispielsweise dreieckig, viereckig oder vieleckig, wie z. B. sechs- oder achteckig, ausgebildet sein. Zudem können die Ausnehmungen 5, 8 auch schlitzförmig bzw. als Langlöcher ausgebildet sein. Die geometrische Form der Ausnehmungen 5, 8 spielt keine derart wesentliche Rolle. Jedoch kann mit einer geschickten Gestaltung der Löcher und der Lochverteilung bei einer extrem hohen Tragfähigkeit des Bauteils eine starke Gewichtsersparung erzielt werden. Beispielsweise ist es möglich, mit dreieckigen Ausnehmungen unterschiedlicher Größe (nicht gezeigt), bei denen beispielsweise immer vier dreieckige Ausnehmungen mit einer Spitze zu einem gemeinsamen Punkt weisen, in Wandungen eines Bauteils eine Gitterstruktur zu erzielen, wobei die Gitterstege durch die Induktion besonders stark und gut erhitzt werden (je nach Abstand der Ausnehmungen zueinander) und dann besonders harte Bereiche ausbilden.

Um gehärtete Bereiche der Längskanten 3 zu vergrößern bzw. die Länge der Kanten 3 und damit die hochhärtbaren Bereiche zu vermehren, können auch halbkreisförmige oder sonstige Ausnehmungen 9 in den Längskanten 3 vorhanden sein, welche ebenfalls benachbart Härtezonen ermöglichen. Die Härtezonen sind in den Figuren 5 und 6 schraffiert dargestellt und mit dem Bezugszeichen 10 versehen.

Die gezeigte Breite der Härtezonen variiert hierbei selbstverständlich von Dauer und Stärke der induktiven Erwärmung.

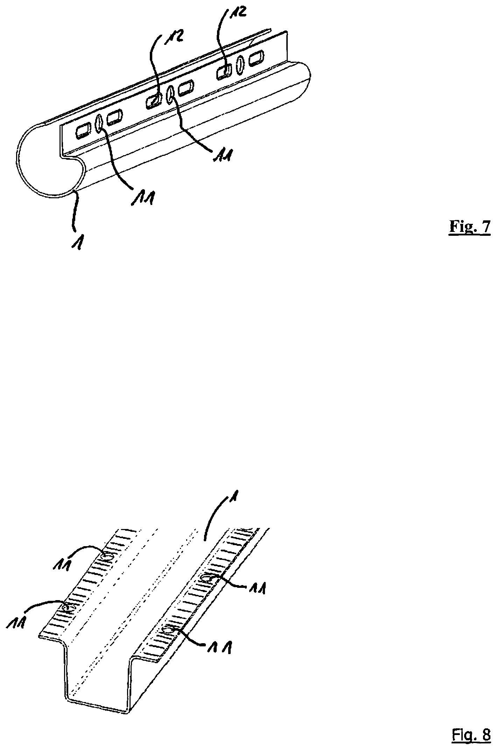

Derartige Ausnehmungen sind insbesondere auch als Ausnehmungen 11 bzw. langlochförmige Ausnehmungen 12 (Figuren 7 und 8), insbesondere in flanschförmigen Anbindungsbereichen von zu härtenden Profilen anzuordnen.

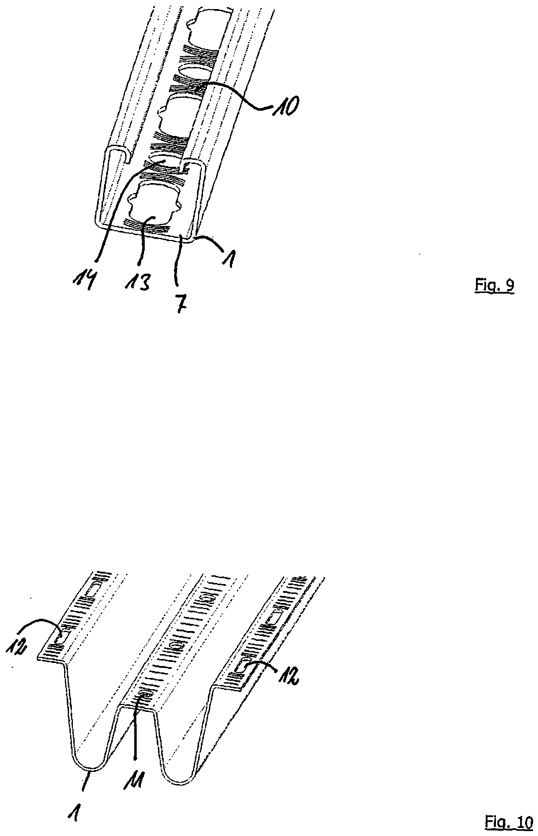

Auch hier lassen sich entsprechende Härteverläufe einstellen (Figuren 7, 8 und 10), wobei die Ausnehmungen auch Ausdehnungen annehmen können, die erheblich sind, beispielsweise Ausnehmungen 13 mit einer Breite, die mehr als die Hälfte der Breite einer Bodenwandung 7 eines Profils 1 entspricht. Hierbei können sich größere Ausnehmungen 13 und kleinere Ausnehmungen 14 abwechseln, um die Härteverläufe bzw. Temperaturverläufe 10 zu beeinflussen.

Eine erfindungsgemäße Vorrichtung zur Durchführung des Verfahrens besitzt einen Bandspeicher 15, in dem sich ein aufgerolltes Stahlblechband befindet, welches unbeschichtet oder mit einer Metallbeschichtung, insbesondere Zinkbeschichtung, ausgebildet sein kann. Um einen kontinuierlichen Prozess gewährleisten befindet sich hinter dem Bandspeicher 15, in dem von der Bandrolle das Band abgezogen wird, eine Anschweißvorrichtung 16, in der der Anfang eines neuen Bandes an das Ende eines alten Bandes geschweißt wird. Das Band läuft dann in eine sogenannte Vorlaufstanze 18, in der die gewünschten Öffnungen und Löcher, zum Teil aber auch Randkonturen, in das Band gestanzt werden, wobei sich vor der Vorlaufstanze 18 ein Schlingenspeicher 17 befindet und einen Schlingenspeicher 19 hinter der Vorlaufstanze 18. Mit derartigen Schlingenspeichern, in denen das Band als Schlinge hineingefördert wird, werden unterschiedliche Bandgeschwindigkeiten und gegebenenfalls ein Bandstillstand sowie die Stillstandszeiten beim Anschweißen ausgeglichen.

Nach dem Schlingenspeicher 19 gelangt das Band in die Profiliermaschine, in der das Band mittels Rollen nach und nach in die gewünschte Form profiliert wird. An die Profiliermaschine 20 schließt sich die Härteeinrichtung 21 an. In der Härteeinrichtung 21 erfolgt die induktive und/oder konduktive Erwärmung des Profils 1 in eine Heizeinrichtung 21a und anschließend eine Kühlung in eine Kühleinrichtung 21b und dadurch Härtung, wobei die Erwärmung sowohl partiell als auch vollflächig auf das Profil 1 einwirken kann. In der Kühleinrichtung 21b der Härteeinrichtung 21 wird das erwärmte Profil 1 mittels Luft, anderen Gasen oder Wasser bzw. anderen Kühlflüssigkeiten mit einer Geschwindigkeit abgekühlt, die über der kritischen Härtegeschwindigkeit liegt. In der Härtevorrichtung 21 kann nach dem Kühlen noch ein Anlassschritt in eine Anlasseinrichtung 21c vorgesehen sein, um die bei der Härtung erfolgten Spannungen auszugleichen und so eine erhöhte Duktilität des Werkstoffs (und ein verbessertes harmonisches Biegeversagen) zu erreichen, die die entsprechende Länge ablängt.

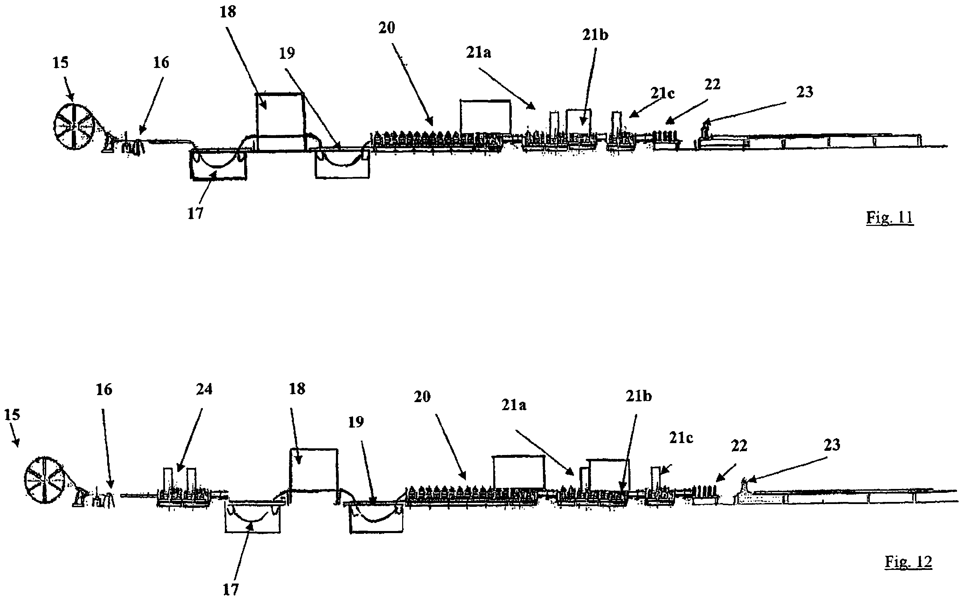

Bei einer weiteren vorteilhaften Ausführungsform (Figur 12) ist zwischen dem Anschweißteil 16 und dem ersten Schlingenspeicher 17 eine Galvannealing-Einheit 24 vorgesehen. Die Galvannealing-Einheit 24 hat die Aufgabe, eine Zink-Schicht auf dem Stahlband durch Erhitzen auf 500° bis 700°C in eine legierte Zink-Eisen-Schicht umzuwandeln, wobei Galvannealing-Schichten grundsätzlich bekannt sind. Die Galvannealing-Einrichtung 24 kann auch zwischen dem zweiten Schlingenspeicher 19 und der Rollprofiliermaschine 20 oder zwischen der Rollprofiliermaschine 20 und der Härtevorrichtung 21 vorhanden sein.

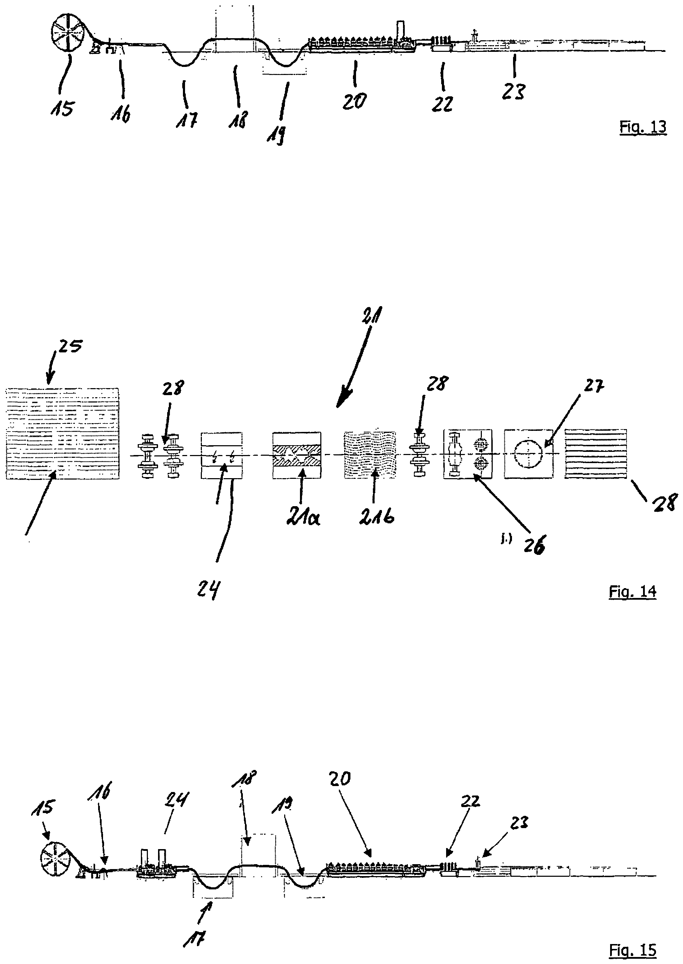

Bei einer weiteren vorteilhaften Ausführungsform (Figuren 13 und 14) werden die Profile in einer Rollformanlage hergestellt und eine partielle oder vollständige Härtung/Anlassen der Profile 1 in einer durch Treibrollen geführten Durchlaufeinrichtung mit induktiver und/oder konduktiver Erwärmung und Kühlung durchgeführt. Bei dieser Vorrichtung sind gleiche Teile mit gleichen Bezugszeichen versehen. Bei dieser erfindungsgemäßen Vorrichtung wird zunächst das Stanzen in der Vorlaufstanze 18 und das Rollprofilieren in der Rollprofiliereinheit 20 abgeschlossen, anschließend die Profile 1 auf das entsprechende Maß abgelängt, womit die mechanische Vorbearbeitung beendet ist (Figur 13). Die abgelängten Profile werden in einem Speicher 25 vorgehalten und mit Treibrollen 28 zunächst einer Galvannealing-Stufe 24 zugeführt und gelangen anschließend in eine Härteeinrichtung 21, bei der in einer Einrichtung 21a die zur Härtung notwendige Erwärmung durchgeführt wird und in einer Einheit 21b nachfolgend ein Abkühlen und gegebenenfalls Wiederaufwärmen zum Zwecke des Anlassens durchgeführt wird. Mit Treibrollen wird das gehärtete Profil anschließend in ein Richtgerüst 26 geführt und gegebenenfalls nachkalibriert, wobei nachfolgend gegebenenfalls noch notwendige Ablängschritte in einer Ablängeinheit 27 durchgeführt werden, in der auch der Verschnitt abgeführt wird. Schließlich kommen die fertigen Bauteile in einen Endspeicher 28. Eine derartige Vorrichtung, die in den Figuren 13, 14 gezeigt ist, ist insbesondere dann von Vorteil, wenn eine bestehende Rollprofilieranlage (Figur 13) um eine erfindungsgemäße mögliche Härtung ergänzt werden soll.

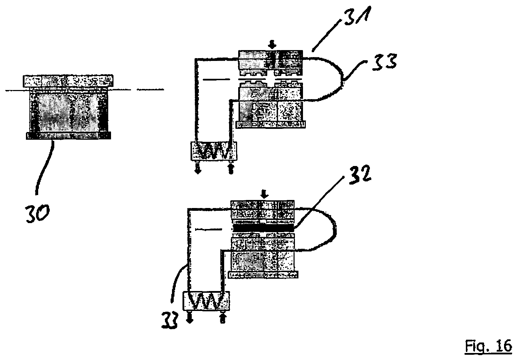

Bei einer weiteren vorteilhaften Ausführungsform (Figuren 15, 16) wird auf eine Vorrichtung gemäß Figur 12 zurückgegriffen, so dass auch hier gleiche Teile mit gleichen Bezugszeichen versehen sind, wobei anschließend die abgelängten Profile 1 in einem Ofen 30 erhitzt werden und anschließend in einem Kühlwerkzeug 31 gegebenenfalls unter Formschluss zum Werkzeug rasch abgekühlt werden. Bei einer weiteren vorteilhaften Ausführungsform, die ebenfalls in Figur 16 dargestellt wird, erfolgt sowohl die Erhitzung als auch das Abkühlen im Werkzeug, wobei die Erhitzung des Werkstücks 32 beispielsweise über induktive Erhitzung erfolgt und anschließend eine Kühlung im gleichen Werkzeug mittels eines Kühlkreislaufs 33 erfolgt.

Um eine gezielte Härtung und insbesondere einen gezielten Härteverlauf über den Querschnitt und nicht nur über die Länge des Werkstücks zu erreichen, werden erfindungsgemäß unterschiedliche Vorrichtungen zum Einbringen der Energie in das Werkstück vorgesehen.

Hierbei kann die Wärme sowohl konduktiv als auch induktiv übertragen werden, wobei es für die über einen Querschnitt bzw. an gezielten Orten im Inline-Verfahren einzubringende Energie, wie bereits ausgeführt, notwendig ist Kanten zu erzeugen, an denen die induktive Wärmeeinbringung besonders schnell und hoch stattfinden kann.

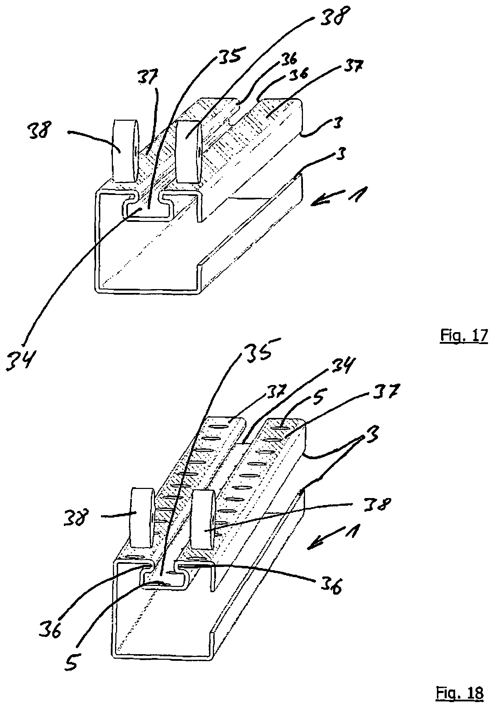

Derartige Kanten können auch dadurch entstehen, dass beim Rollprofilieren eine vertiefte Nut 35 mit oben eingezogenen Kanten 36 (Figur 17) ausgebildet wird, wobei Konduktoren oder Induktoren 38 in benachbarten Wandbereichen 37 einwirken und in diesen Bereichen 37 die Wärme einbringen, die dann über den Querschnitt des Profils 1 gradiert abnimmt.

Bei einer weiteren vorteilhaften Ausführungsform ist in den Bereichen 37, in denen die Konduktoren oder Induktoren 38, zusätzlich Ausnehmungen 5 vorhanden, um weitere Kanten für ein schnelles Aufheizen zu bilden. Die Aufheizung erfolgt hierbei dann an den eingezogenen Kanten 36 der Nut 35 und im Bereich der Kanten der Löcher 5, wobei zusätzlich Löcher 5 im Boden der Nut 35 vorhanden sein können.

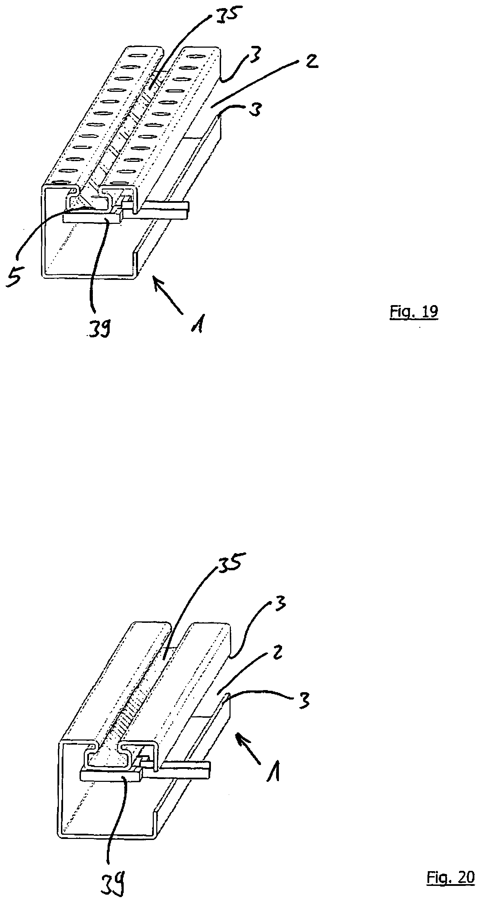

Bei einer weiteren vorteilhaften Ausführungsform (Figuren 19, 20) durchgreift eine Induktionsspule 39 eine von Kanten 3 begrenzte längsschlitzartige Öffnung 2 eines offenen Profils 1 und wirkt hierbei auf den bereits beschriebenen Nutboden 35 bzw. dort vorhandene Löcher 5 ein.

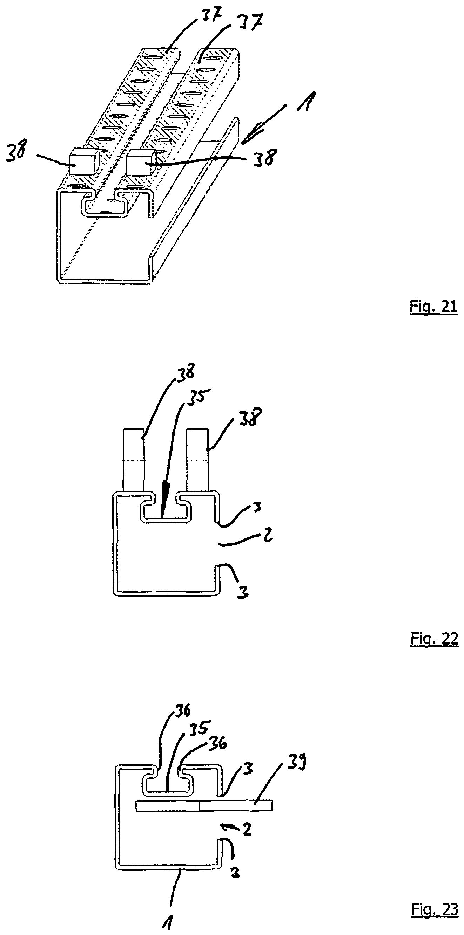

Zusätzlich oder gleichzeitig können Konduktoren (Figur 21) auf die Bereiche 37 des Profils 1 einwirken.

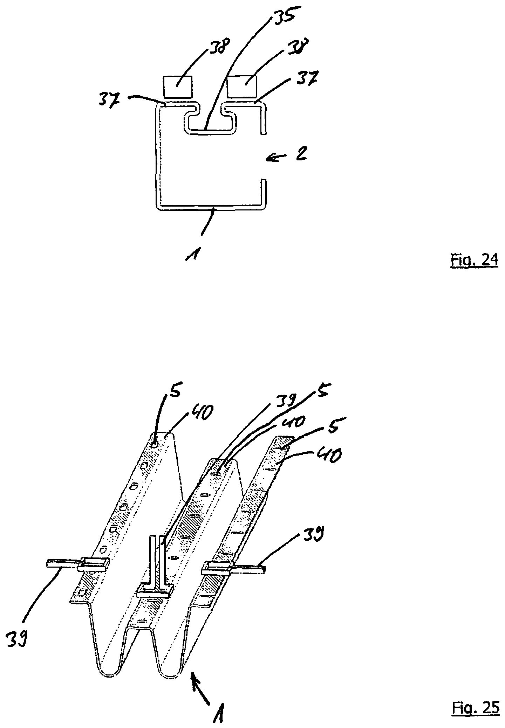

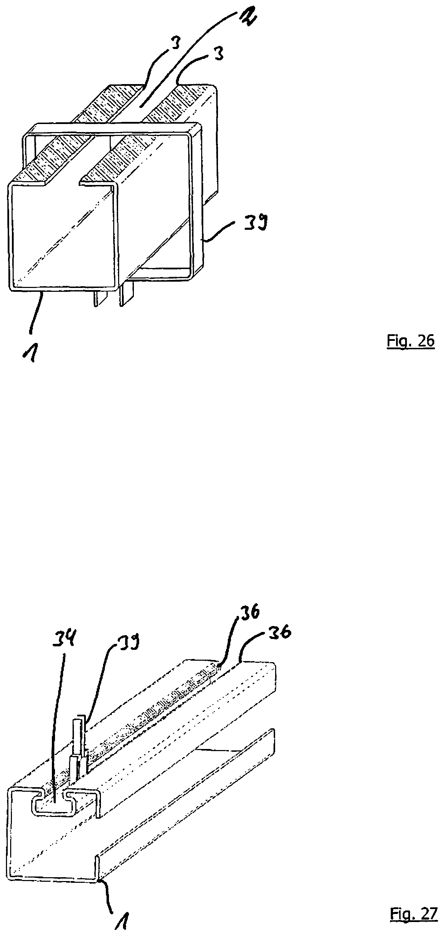

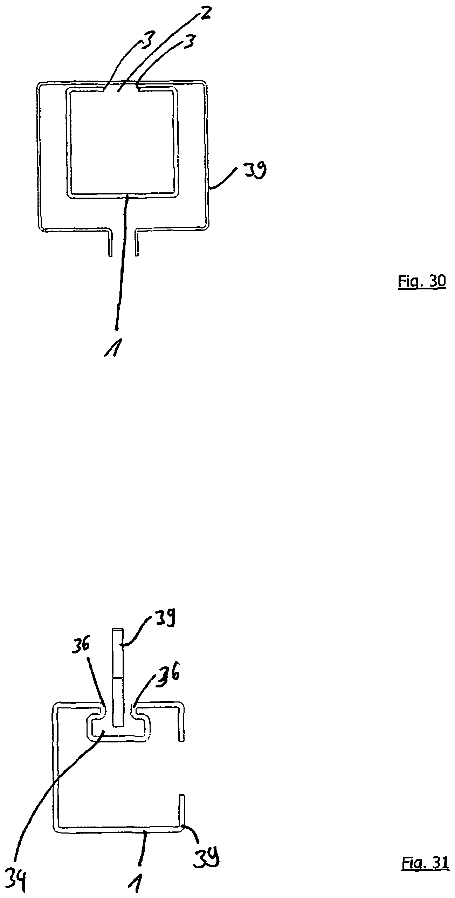

Darüber hinaus ist es auch möglich, eine Mehrzahl von Induktoren 39 auf gezielte Bereiche 40 eines Bauteils 1 einwirken zu lassen (Figuren 25, 27, 28, 29, 31, 32), wobei diese besonderen Bereiche 40 beispielsweise Flansch- bzw. Anbindungsbereiche eines offenen Profils 1 sind, wobei diese Flansch- bzw. Anbindungsbereiche 40 des offenen Profils 1 insbesondere über Löcher 5 verfügen, wobei die Löcher 5 sowohl zur Befestigung des Bauteils an weiteren Bauteilen und zum bereits beschriebenen Effekt der Kantenerhitzung beitragen. Darüber hinaus kann eine gezielte Erwärmung auch von Kanten 36 erfolgen, die eine Nut 34 begrenzen, wobei der Induktor 39 hierbei in die Nut 34 eintaucht und auf die Kanten 36 einwirkt (Figur 27).

Im einfachsten Fall ist ein Ringinduktor 39 vorhanden, durch das Profil 1 durchgeführt wird, insbesondere einen offenen Profilquerschnitt 1 mit einer längs verlaufenden Profilöffnung 2, die in einer Wandung des Profils 1 vorhanden ist und von Kanten 3 begrenzt wird. Hier tritt der Effekt einer stärkeren und schnelleren Erhitzung der Kanten 3 gegenüber dem restlichen Bauteil 1 stark hervor, wobei die Wärmeverteilung und damit auch die Härteverteilung nach dem Härten ausgehend von den Kanten 3 nach außen schwächer wird. Somit kann auch mit der gezielten Orientierung einer einzigen Längsöffnung 2 im offenen Profil 1 ein gewünschter Härteverlauf über den Querschnitt des Profils 1 sichergestellt werden.

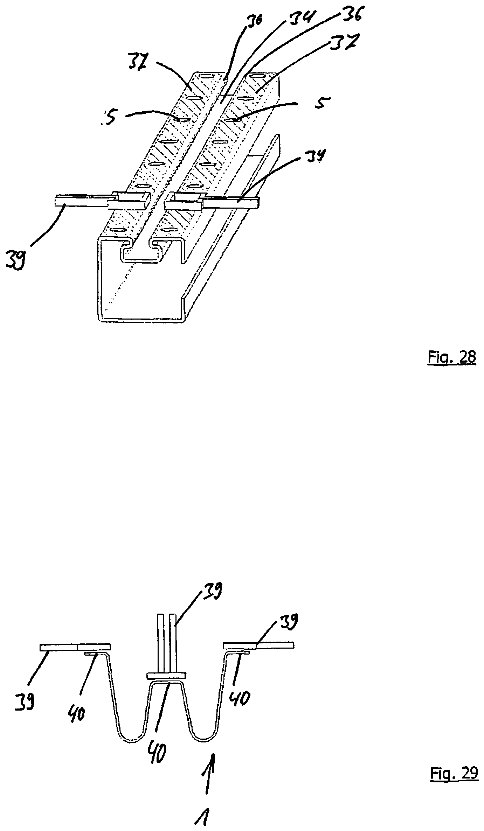

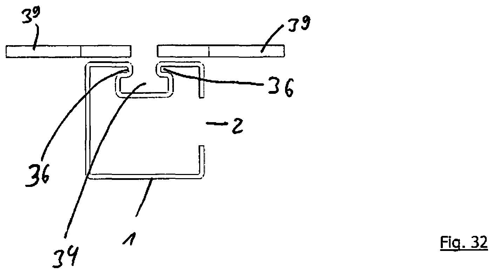

Induktoren 39 können auch über Flächen 37 mit Löchern 5 geführt werden, wobei die Flächen 37 mit Kanten 36 beispielsweise eine Nut 34 begrenzen. Werden hierbei ebenfalls Löcher 35 in den Flächen 37 vorgesehen, kann eine schnelle Erhitzung und eine gezielte Härtung in den Bereichen der Löcher erfolgen (Figuren 28 und 32).

Bei der Erfindung ist von Vorteil, dass durch das erfindungsgemäße Verfahren die bei einer Induktion in einem metallischen Bauteil an den Kanten auftretenden Effekte der schnelleren und stärkeren Erwärmung im Kantenbereich gezielt für eine Einstellung eins Härtegradienten über den Querschnitt und über die Länge eines Inline-gefertigten Profils nutzbar ist. Zwar war die Einstellung der Härte über die Länge bereits bekannt, jedoch nicht die Einstellung von Härtegradienten über die Länge. die Einstellung der Härte über den Querschnitt ist nun erstmals möglich.

Hierbei kann der Härteverlauf sehr feinfühlig über erzeugte Kanten, beispielsweise Kanten einer eingeformten Nut, insbesondere eingezogene Kanten einer eingeformten Nut, Kanten von Durchsetzungen oder Sickeneinprägungen, begrenzende Kanten von Löchern und Schlitzen und dergleichen eingestellt werden.

Der Härtegradient kann hierbei sowohl durch die Einwirkungsdauer der Induktion als auch die eingebrachte Energie bzw. Stärke der Induktion, die Verweildauer, d. h. Bandgeschwindigkeit, und die Lochverteilung, Lochgröße und Lochart eingestellt werden.

Die Löcher können vorteilhafter Weise sogar so verteilt angeordnet sein, dass eine quasi Gitterstruktur des Bauteils ausgebildet wird.

Bei dem erfindungsgemäßen Schaffen von Kanten zur Nutzung des Kanteneffektes bei der Induktion ist zudem von Vorteil, dass die Bauteile trotz einer Verstärkung bzw. Erhöhung der Stabilität leichter sind als ein vergleichsweise vollständig gehärtetes Bauteil.

Durch diese Einstellung eines Härtegradienten im Bauteil sowohl über den Querschnitt als auch über die Länge lässt sich im Falle einer Gewalteinwirkung auf ein derartiges Bauteil ein sehr harmonischer Biege- bzw. Versagensverlauf erzielen (Figur 46), der keine scharfen bzw. schlagartigen Knickungen oder Kanten aufweist.

Zudem ist das erfindungsgemäße Verfahren einfach, schnell und sicher durchführbar.

### Bezugszeichenliste:

- 1: Profil
- 2: Profilbereich
- 3: Kanten
- 4: Kantenbereiche
- 5: Härteausnehmungen
- 6: Seitenwandungen
- 7: Bodenwandungen
- 8: axial verlaufende Öffnungen
- 9: sonstige Ausnehmungen
- 10: Härtezonen
- 11: Ausnehmungen
- 12: langlochförmige Ausnehmungen
- 13: größere Ausnehmungen
- 14: kleinere Ausnehmungen
- 15: Bandspeicher
- 16: Anschweißvorrichtung
- 17: Schlingenspeicher
- 18: Vorlaufstanze
- 19: Schlingenspeicher
- 20: Profiliermaschine
- 21: Härteeinrichtung
- 21a: Einheit von 21
- 21b: Einheit von 21
- 21c: Einheit von 21
- 22: Auslaufrollgang
- 23: Ablängeinheit
- 24: Galvannealing-Einheit
- 25: Speicher
- 26: Richtgerüst
- 27: Ablängeinheit
- 28: Endspeicher
- 29:
- 30: Ofen
- 31: Kühlwerkzeug
- 32: Werkstücks
- 33: Kühlkreislaufs
- 34: Nut
- 35: vertiefte Nut
- 36: eingezogenen Kanten der Nut 35
- 37: benachbarte Wandbereiche
- 38: Konduktoren oder Induktoren
- 39: Induktorschleife / Induktor / Ringinduktor
- 40: Bereiche 40 eines Bauteils 1

## Patentansprüche

1. Verfahren zum Herstellen von gehärteten Profilen, insbesondere von gehärteten offenen Profilen, wobei das Bauteil (1) zumindest teilbereichsweise auf eine Temperatur oberhalb der Austenitisierungstemperatur des Grundwerkstoffes aufgeheizt wird und das Bauteil (1) nach dem Aufheizen mit einer Geschwindigkeit abgekühlt wird, die über der kritischen Härtegeschwindigkeit liegt, wobei die für die Erwärmung notwendige Energie zumindest teilweise durch Induktion eingebracht wird, **dadurch gekennzeichnet, dass** in dem Bauteil (1) zur Einstellung eines Temperatur- und Härtegradienten über den Querschnitt des Bauteiles (1) vor der Erwärmung freie Kanten angeordnet werden, wobei Größe, Art und Ausdehnung der Kanten auf einen gewünschten Härtegrad und/oder Härtegradienten abgestimmt angeordnet werden, wobei die freien Kanten durch Ausnehmungen, Sicken, Längs- oder Quernuten erzeugt werden und als Ausnehmungen Löcher, Rundlöcher, drei- oder mehreckige Löcher, Schlitze, Ein- oder Durchprägungen eingebracht werden.

2. Verfahren nach Anspruch 1, **dadurch gekennzeichnet, dass** eine Grunderwärmung durch Konduktion und/oder Konvektion und/oder Strahlung durchgeführt wird und eine teilbereichsweise Erwärmung des Bauteils (1) über die Austenitisierungstemperatur, insbesondere im Bereich der freien Kanten über Induktion, durchgeführt wird.

3. Verfahren nach einem der vorhergehenden Ansprüche, **dadurch gekennzeichnet, dass** als Kanten für die Einstellung eines Härtegradienten über den Querschnitt des Bauteils die eine Längsöffnung (2) des offenen Profils (1) begrenzenden Kanten (3) verwendet werden.

4. Verfahren nach einem der vorhergehenden Ansprüche, **dadurch gekennzeichnet, dass** zur Einstellung eines Temperatur- und/oder Härtegradienten über die axiale Ausdehnung des Profils (1) und/oder den Querschnitt des Profils (1) Ausnehmungen nach Größe und/oder Anzahl verteilt angeordnet werden, wobei in Bereichen, die auf eine höhere Temperatur erhitzt werden sollen und/oder in denen das Material eine größere Härtung erreichen soll, mehr Ausnehmungen und damit mehrere freie Kanten vorhanden sind als in Bereichen, die eine geringere Erwärmung und/oder Härtung bzw. gar keine Härtung erfahren sollen.

5. Verfahren nach einem der vorhergehenden Ansprüche, **dadurch gekennzeichnet, dass** die Ausnehmungen derart eingebracht werden, dass das verbleibende Grundmaterial Stege nach Art einer netzwerkartigen Tragstruktur ausbildet.

6. Verfahren nach einem der vorhergehenden Ansprüche, **dadurch gekennzeichnet, dass** als Grundmaterial beschichtetes oder unbeschichtetes Stahlblechmaterial verwendet wird.

7. Verfahren nach Anspruch 6, **dadurch gekennzeichnet, dass** das Stahlblechmaterial verzinkt ist.

8. Verfahren nach Anspruch 7 oder 8, **dadurch gekennzeichnet, dass** das Grundmaterial zur Ausbildung einer Zink-EisenLegierung an der Oberfläche vor der Temperaturerhöhung zum Härten oder bei der Temperaturerhöhung zum Härten zur Ausbildung der Zink-Eisen-Schicht auf einer Temperatur zwischen 500° und 700°C erhitzt und dort gehalten wird.

9. Verfahren nach einem der vorhergehenden Ansprüche, **dadurch gekennzeichnet, dass** das über die Austenitisierungstemperatur erhitzte Profil (1) mit einem Gasstrom und/oder einem Flüssigkeitsstrom und/oder formschlüssigen Kontakt mit einer kalten Form mit einer Geschwindigkeit gekühlt wird, die über der kritischen Härtegeschwindigkeit liegt.

10. Verfahren nach einem der vorhergehenden Ansprüche, **dadurch gekennzeichnet, dass** zur Energieeintragung mittels Induktion das Bauteil durch eine Induktionsspule axial hindurchgeführt wird.

11. Verfahren nach einem der vorhergehenden Ansprüche, **dadurch gekennzeichnet, dass** eine oder mehrere Induktionsspulen auf einen Teilbereich des Werkstücks einwirken.

12. Verfahren nach einem der vorhergehenden Ansprüche, **dadurch gekennzeichnet, dass** das Profil (1) nach dem Kühlen mit einer Geschwindigkeit, die über der kritischen Härtegeschwindigkeit liegt, angelassen wird, um bei der Härtung eingetragene Spannungen auszugleichen.

13. Vorrichtung zum Durchführen des Verfahrens nach einem der vorhergehenden Ansprüche, zum Herstellen von gehärteten Profilen, insbesondere gehärteten offenen rollgeformten Profilen, wobei zumindest eine Profiliereinheit vorhanden ist, in der ein Blechband zu einem Profil umgeformt wird und zudem eine Einrichtung vorhanden ist, in der das Profil auf eine Temperatur über der Austenitisierungstemperatur aufgeheizt wird und eine Abkühleinrichtung vorhanden ist, in der das zuvor erhitzte Profil mit einer über der kritischen Härtegeschwindigkeit abgekühlt werden kann, **dadurch gekennzeichnet, dass** zudem eine Vorrichtung zum Prägen und/oder Stanzen von freien Längskanten, Sicken und/oder Quernuten und/oder Einschneiden von Ausnehmungen, Löchern, Rundlöchern, drei- oder mehreckigen Löchern, Schlitzen, Ein- oder Durchprägugen vor dem Erwärmen vorhanden ist und in der Einrichtung zum Erwärmen des Bauteils Induktoren oder Konduktoren vorhanden sind, die zumindest teilbereichsweise auf das Profil einwirken, um eine über den Querschnitt gradierte Temperaturerhöhung und Härtung zu erzielen.

14. Vorrichtung nach Anspruch 13, **dadurch gekennzeichnet, dass** da eine Kühleinrichtung (21b) vorhanden ist, welche so ausgebildet ist, dass ein hierdurch geführtes Profil mit einer Geschwindigkeit abgekühlt wird, die über der kritischen Härtegeschwindigkeit liegt.

15. Vorrichtung nach Anspruch 13 oder 14, **dadurch gekennzeichnet, dass** eine Anlasseinrichtung vorhanden ist, in der das gekühlte und gehärtete Profil beim Durchlaufen erwärmt und dabei angelassen wird, um durch die Härtung erzeugte Spannungen auszugleichen.

16. Gehärtetes Profilbauteil aus einem teilbereichsweise gehärteten Stahlblech, hergestellt nach einem Verfahren nach einem oder mehreren der Ansprüche 1 bis 12 und insbesondere hergestellt mit einer Vorrichtung nach einem der Ansprüche 13 bis 15 wobei das Bauteil über dem Querschnitt des Bauteiles mit Härtegradienten ausgebildet ist, wobei zur Ausbildung des Härtegradienten über den Querschnitt des Bauteils freie Kanten angeordnet sind, wobei die freien Längskanten durch Ausnehmungen, Sicken, Längs- oder Quernuten gebildet sind und als Ausnehmungen Löcher, Rundlöcher, drei- oder mehreckige Löcher, Schlitze, Ein- oder Durchprägungen vorhanden sind und die Härte ausgehend von den Kanten (3) über den Querschnitt des Bauteils verläuft.

## Claims

1. Method for producing hardened profiles, in particular of hardened open profiles,
wherein the component (1) is heated at least in partial areas to a temperature above the austenitizing temperature of the base material, and the component (1) is cooled after heating at a rate which is above the critical curing rate, wherein the energy required for the heating is at least partially introduced by induction,
**characterised in that** prior to the heating free edges are arranged in the component (1) for setting a temperature and / or hardness gradient over the cross section of the component (1), wherein size, type and extent of the edges are arranged matched to a desired degree of hardness and / or hardness gradient, wherein the free edges are formed by means of recesses, creases, longitudinal or transversal grooves and introduced as recesses, holes, round holes, tri- or polygonal holes, slits, embossings or punchings.

2. Method according to claim 1, **characterized in that** a basic heating is carried out by means of conduction and / or convection and / or radiation, and a partial area heating of the component (1) above the austenitizing temperature, in particular in the area of the free edges, is carried out via induction.

3. Method accord one of the preceding claims, **characterized in that** the edges (3) delimiting a longitudinal opening (2) of the open profile (1) are used as edges for the adjustment of a hardness gradient over the cross section of the component.

4. Method according to one of the preceding claims, **characterised in that** recesses are arranged distributed in size and / or number in order to adjust a temperature and / or hardness gradient over the axial extent of the profile (1) and/or the cross section of the profile (1), wherein more recesses and therewith more free edges are present in areas which are to be heated to a higher temperature and/or in which the material is to attain a higher hardness, than in areas which are to experience a lower heating and/or curing or no curing at all.

5. Method according to one of the preceding claims, **characterised in that** the recesses are introduced so that the remaining base material forms webs in the manner of a network-like support structure.

6. Method according to one of the preceding claims, **characterized in that** a coated or uncoated steel sheet material is used as a base material.

7. Method according to claim 6, **characterised in that** the steel sheet material is galvanized.

8. Method according to claim 6 or 7, **characterized in that** the base material for the formation of a zinc-iron alloy on the surface prior to the temperature elevation for curing or during the temperature elevation for curing to form the zinc-iron layer is heated to and held at a temperature between 500 ° and 700 °C.

9. Method according to one of the preceding claims, **characterized in that** the profile (1) heated above the austenitizing temperature is cooled with a gas stream and / or a liquid stream and / or a positive-fit contact with a cold mold at a rate which is above the critical curing rate.

10. Method according to one of the preceding claims, **characterized in that** the component is passed axially through an induction coil for the purpose of energy input by means of induction.

11. Method according to one of the preceding claims, **characterized in that** one or more induction coils act on a partial area of the workpiece.

12. Method according to one of the preceding claims, **characterized in that** the profile (1) is thermally treated after cooling at a rate which is above the critical curing rate in order to compensate for the stresses introduced during curing.

13. Apparatus carrying out of the process according to one of the preceding claims, for the production of hardened profiles, in particular hardened open roll-formed profiles, wherein at least one profiling unit is present, in which a sheet metal strip is formed into a profile, and in addition a device is present in which the profile is heated to a temperature above the austenitizing temperature and a cooling device is present in which the previously heated profile can be cooled at a rate above the critical curing rate, **characterised in that** in addition a device for embossing and / or punching free longitudinal edges, creases, transversal grooves and / or cutting in recesses, holes, round holes, tri- or polygonal holes, slits, embossings or punchings prior to the heating is provided, and in the device for heating the component inductors or conductors are present, which at least in partial areas act upon the profile in order to achieve a temperature elevation and curing which is graded over the cross section.

14. Apparatus according to claim 13, **characterised in that** there is a cooling device (21b) which is designed in such a way that a profile guided therethrough is cooled at a rate which is above the critical curing rate.

15. Apparatus according to claim 13 or 14, **characterized in that** there is a thermal treatment device in which the cooled and hardened profile is heated during passage and is thereby allowed to compensate for stresses produced by the curing.

16. Hardened profile component made of a steel sheet cured in partial areas, produced by a method according to one or more of claims 1 to 12, and in particular produced by a device according to one of Claims 13 to 15, wherein the component is formed with a hardness gradient over the cross section of the component, wherein, for the formation of the hardness gradient over the cross section of the component free edges are disposed, wherein the free edges are formed by recesses, creases, longitudinal or transversal groves and wherein holes, round holes, tri- or polygonal holes, slits, embossings or punchings are present as recesses and wherein the hardness extends from the edges (3) over the cross section of the component.

## Revendications

1. Procédé de fabrication de profilés durcis, en particulier de profilés ouverts durcies, dans lequel le composant (1) est chauffé au moins par zones localisées à une température supérieure à la température d'austénitisation du matériau de base et le composant (1) après le chauffage est refroidi à une vitesse, laquelle se situe au-dessus de la vitesse de durcissement critique, dans lequel l'énergie nécessaire pour le chauffage est au moins partiellement introduite par induction, **caractérisé en ce que**, dans le composant (1), afin de régler un gradient de température et / ou de dureté sur la section transversale du composant (1), des bords libres sont disposés, dans lequel la taille, le type et l'étendue des bords sont disposé adapté à un degré de dureté et / ou un gradient de dureté désiré, dans lequel les bords libres sont fabriqués par le moyen d'évidements de nervure, de rainures longitudinales ou transversales, et en tant qu'évidements des trous, des trous ronds, des trous tri- ou polygonaux, des fentes, des empreintes ou empreintes à travers sont introduits.

2. Procédé selon la revendication 1, **caractérisé en ce qu'**un chauffage de base est effectué par conduction et / ou convection et / ou rayonnement et un chauffage par zones localisées du composant (1) au-dessus de la température d'austénitisation, en particulier dans la zone des bords libres par induction, est effectué.

3. Procédé selon l'une quelconque des revendications précédentes, **caractérisé en ce que**, en tant que bords pour le réglage d'un gradient de dureté sur la section transversale du composant les bords (3) délimitant une ouverture longitudinale (2) du profilé ouvert (1) sont utilisées.

4. Procédé selon l'une quelconque des revendications précédentes, **caractérisé en ce que** pour le réglage d'un gradient de température et / ou de dureté sur l'extension axiale du profilé (1) et / ou la section transversale du profilé (1) des évidements sont disposés répartis selon la taille et / ou le numéro, dans lequel, dans les zones qui doivent être chauffées à une température plus élevée et / ou dans lesquelles le matériau est de parvenir à une plus grand durcissement, plus d'évidements et donc plus de bords libres sont présents que dans les zones qui doivent subir un faible chauffage et / ou durcissement ou aucun durcissement.

5. Procédé selon l'une quelconque des revendications précédentes, **caractérisé en ce que** les évidements sont introduits de telle manière que le matériau de base restant forme des traverses à la manière d'une structure porteuse en forme de réseau.

6. Procédé selon l'une quelconque des revendications précédentes, **caractérisé en ce que** du matériau de tôle d'acier revêtu ou non revêtu est utilisé en tant que matériau de base.

7. Procédé selon la revendication 6, **caractérisé en ce que** le matériau en tôle d'acier est galvanisée.

8. Procédé selon la revendication 7 ou 8, **caractérisé en ce que** le matériau de base, pour la formation d'un alliage zinc-fer sur la surface avant l'élévation de la température afin de durcir ou durant l'élévation de la température afin de durcir pour la formation de la couche zinc-fer est chauffé et maintenu à une température entre 500° et 700 °C.

9. Procédé selon l'une quelconque des revendications précédentes, **caractérisé en ce que** le profilé (1) chauffé au-dessus de la température d'Austénitisation est refroidi avec un courant de gaz et / ou un écoulement de liquide et / ou un contact positif avec un moule à froid avec une vitesse qui est supérieure à la vitesse de durcissement critique.

10. Procédé selon l'une quelconque des revendications précédentes, **caractérisé en ce que** pour l'introduction d'énergie par induction, le composant est passé axialement à travers une bobine d'induction.

11. Procédé selon l'une quelconque des revendications précédentes, **caractérisé en ce qu'**une ou plusieurs bobines d'induction agissent sur une zone localisée de la pièce.

12. Procédé selon l'une quelconque des revendications précédentes, **caractérisé en ce que** le profilé (1) après le refroidissement à une vitesse qui est supérieure à la vitesse de durcissement critique est traité thermiquement pour compenser les tensions enregistrées pendant le durcissement.

13. Dispositif pour effectuer le procédé selon l'une quelconque des revendications précédentes pour fabriquer des profilés durcis, en particulier de profilés formés à enroulement ouverts durcis, dans lequel au moins une unité de profilage est présente, dans laquelle une bande de tôle est formée dans un profil et en outre un dispositif est présent, dans lequel le profilé est chauffé à une température au-dessus de la température d'austénitisation et un dispositif de refroidissement est présent, dans lequel le profilé chauffé préalablement peut être refroidi à une vitesse au-dessus de la vitesse de durcissement critique, **caractérisé en ce qu'**en outre un dispositif pour l'empreinte et / ou l'emboutissage de bords longitudinaux, nervures et / ou rainures transversales libres et / ou le découpage d'évidements, de trous, de trous ronds, de trou tri- ou polygonaux, de fentes, d'empreintes ou d'empreintes à travers avant le chauffage est présent et dans le dispositif pour le chauffage du composant des inducteurs ou des conducteurs sont présents, lesquelles agissent au moins par zones localisées sur le profilé, afin d'obtenir une augmentation de température et un durcissement gradué sur la section transversale.

14. Dispositif selon la revendication 13, **caractérisé en ce qu'**un dispositif de refroidissement (21b) est présent, lequel est formé de manière à refroidir un profilé y étant conduit à travers avec une vitesse qui se situe au-dessus de la vitesse de durcissement critique.

15. Dispositif selon la revendication 13 ou 14, **caractérisé en ce que** un dispositif de traitement thermique est présent, dans lequel le profilé refroidi et durci est chauffé durant la traversée et en même temps traité thermiquement pour compenser les tensions enregistrées durant le durcissement.

16. Composant profilé durci fabriqué d'une tôle d'acier durci par zones localisées, fabriqué selon un procédé selon une ou plusieurs des revendications 1 à 12 et en particulier fabriqué avec un dispositif selon l'une des revendications 13 à 15, dans lequel le composant est formé avec des gradients de dureté sur la section transversale du composant, dans lequel, pour la formation du gradient de dureté à travers la section transversale du composant, des bords libres sont disposés, dans lequel les bords libres sont formés par des évidements, des nervures, des rainures longitudinales ou transversales et en tant qu'évidements des trous, des trous ronds, des trous tri- ou polygonaux, des fentes, des empreintes ou des empreintes à travers sont présent.
